# EUROPEAN PATENT APPLICATION

(11) **EP 1 928 135 A1**
(43) Date of publication of application: **04.06.2008**
(21) Application number: 06125213.6
(22) Date of filing: 01.12.2006
(51) Int. Cl.: H04L 25/02, H04L 1/00

(54) **Determination of properties of a transmission channel using embedded watermark received data**

(71) Applicant: Deutsche Thomson OHG, 30625 Hannover (DE)
(72) Inventor: Jax, Peter, 30539 Hannover (DE)
(74) Representative: Hartnack, Wolfgang

(57) **Abstract**

Known channel identification and/or equalisation methods are either based on specific training sequences known a priori to both transmitter and receiver and sent at pre-defined times, or on assumptions on the statistical properties of the transmitted signal. According to the invention, the receiving site has neither the possibility to send feedback nor detailed a priori information on the characteristics of the transmission signal. The transmitter embeds information on properties of the original signal into the host signal via watermarking techniques. The watermarked signal is transmitted over the unknown channel. The receiver compares the properties of the received signal with the original properties as decoded from the embedded watermark message. These differences can be utilised to determine the channel characteristics. Using the knowledge about these channel characteristics, compensation techniques can be applied like channel equalisation and/or noise suppression filtering, or quality metrics can be computed.

## Description

The invention relates to a method and to an apparatus for determining, providing or deriving data that are related to properties of a signal transmission channel.

### Background

Known channel identification and/or equalisation methods, at least in the speech and audio domain, are either based on specific training sequences known a priori to both transmitter and receiver and sent at pre-defined times, or on assumptions on the statistical properties of the transmitted signal. The latter techniques are called 'blind' because the exact transmission signal is not known to the receiver. It is also possible that the receiver sends feedback on specific statistical properties of the received signal back to the transmitter which will use this data for identifying the channel characteristics.

It is known that additional information can be transmitted over a channel using watermarking within the transmitted signal.

### Further background information is disclosed in:

Pierre Moulin, "Embedded-Signal Design for Channel Parameter Estimation Part I: Linear Embedding", Proc. of IEEE Workshop on Statistical Signal Processing, 2003, pp.38-41, and "Embedded-Signal Design for Channel Parameter Estimation Part II: Quantisation Embedding", Proc. of IEEE Workshop on Statistical Signal Processing, 2003, pp.42-45;
Gaël Mahé, André Gilloire, Lætitia Gros, "Correction of the Voice Timbre Distortions in Telephone Networks: Method and Evaluation", Speech Communication, 2004, vol.43, no.3, pp. 241-266;
Peter Vary, Rainer Martin, "Digital Speech Transmission - Enhancement, Coding and Error Concealment", 2006, John Wiley & Sons Ltd;
Bernd Geiser, Peter Jax, Peter Vary, "Artificial Bandwidth Extension of Speech Supported by Watermark-Transmitted Side Information", 2005, Proc. of INTERSPEECH;
Antony W.Rix, John G.Beerends, Doh-Suk Kim, Peter Kroan, Ohced Ghitsa, "Objective Assessment of Speech and Audio Quality", IEEE Trans. on Audio, Speech and Language Proc., 14:6, November 2006.

### Invention

The most straight-forward technique to identify a transmission channel is to measure its properties with a specific test signal. That is, from time to time the transmitter emits a pre-defined training sequence into the transmission channel. Both training sequence and time are known to the receiver. At the pre-defined time instants the receiver listens to the channel outcome and can measure the statistical properties of the channel by comparing the training sequence with the observed channel output. This method is, for example, widely used in state-of-the-art wireless radio transmission systems to adapt the receiver to quickly-varying radio channels.

However, in some scenarios there is no possibility to send specific training sequences like e.g. white noise, because the channel outcome will e.g. be presented to a person, for instance in analog telephony. This approach is also not applicable if the channel identification/equalisation is to be put on top of an existing transmission scheme that does not provide time slots for sending such training sequences.

It has been proposed to embed a training sequence directly (without dedicated time slot) into a transmission signal using watermarking techniques, cf. the above cited Moulin article. However, it is tried to identify certain channel properties directly by measuring modifications of this watermark at the receiver, i.e. the channel identification is based on the degradation of the watermark itself. Owing to interference of the host signal with the low-power watermark, the channel identification is rather difficult. Furthermore, it is difficult to select the watermarking technology because not all channel properties can be observed with one technology, cf. the above cited Moulin article.

In scenarios where it is not applicable to send training sequences, and where there is no possibility to have feedback information as well, state-of-the-art methods rely on blind channel identification. This means that certain typical statistical properties of the transmission signal must be assumed. The receiver compares these assumed statistical properties with the observed properties of the channel output and thus determines the channel properties, cf. the above cited Mahé article. Note that this method can only be as good as the initial assumption. Any deviation of the original signal from these assumption will degrade the outcome of the system. An example is found in some proposed telephony receivers that assume a certain long-term spectral envelope for the speech signal. For channel equalisation these systems try to adapt the equalisation filter such that the long-term spectral envelope of the filtered version of the received signal matches the assumed long-term behaviour, cf. the above cited Mahé article.

A problem to be solved by the invention is to provide the receiver side with information about the true characteristics of the transmission signal or the channel, which information can be used for adaptation of the receiver side processing to these characteristics. This problem is solved by the methods disclosed in claims 1 to 3. Apparatuses that utilise these methods are disclosed in claims 4 and 5.

The invention is not related to any mechanisms for channel identification or equalisation that are based on feedback schemes. Instead, the invention is related to unidirectional schemes in which the receiving site has neither the possibility to send feedback nor detailed a priori information on the characteristics of the transmission signal or the channel. The invention allows for backwards-compatible transport of side information in order to achieve high-quality channel identification without necessity for transmitting specific training sequences or feedback communication.

The invention can be used for any kind of uni-directional signal transmission during which the signal is subject to e.g. linear distortion and/or additive noise. For example, in the audio and speech domain it can be applied for improving analog telephony systems, amplitude modulation (AM) radio transmission or other analog transmission schemes. Further, the invention can be used to detect or identify certain linear or additive signal manipulations, even in the digital domain.

The invention achieves improvement of the quality of signal transmission via unknown channels. The transmitter embeds information on certain statistical properties of the original signal into the host or main signal itself via watermarking techniques. The watermarked signal is transmitted over the unknown channel. Note that the statistical properties of the original signal and the received signal are in general different because the signal is degraded, e.g. by linear distortion and/or additive noise. The receiver compares the properties of the received signal with the original properties as decoded from the embedded watermark message. These differences can be utilised to determine the channel characteristics. Using the knowledge about these channel characteristics, compensation techniques can be applied like channel equalisation and/or noise suppression filtering, or quality metrics can be computed.

At receiver side, the detection and processing of the watermark data can be switched off or de-activated in case (e.g. within a pre-determined time period) no watermark is detected, which improves the compatibility.

In principle, the inventive method is suited for determining data that are related to properties of a signal transmission channel, said method including the steps:
- evaluating properties of an original signal and providing corresponding original signal properties data, and optionally encoding said original signal properties data;
- watermarking said original signal using message data derived from said original signal properties data or said encoded original signal properties data;
- transmitting said watermarked original signal via said transmission channel;
- at receiver side, detecting said message data in the received watermarked signal and correspondingly decoding said encoded message data if encoded at transmitter side, thereby providing said original signal properties data, and evaluating properties of said received watermarked signal and providing corresponding reception signal properties data;
- deriving data that are related to properties of said signal transmission channel by comparing said original signal properties data and said reception signal properties data,
or is suited for providing data that are related to properties of a signal transmission channel, said method including the steps:
- evaluating properties of an original signal and providing corresponding original signal properties data, and optionally encoding said original signal properties data;
- watermarking said original signal using message data derived from said original signal properties data or said encoded original signal properties data;
- transmitting said watermarked original signal via said transmission channel,
wherein the embedded message data can be used in a receiver of said transmitted watermarked original signal as follows:
- detecting said message data in the received watermarked signal and correspondingly decoding said encoded message data if encoded at transmitter side, thereby providing said original signal properties data, and evaluating properties of said received watermarked signal and providing corresponding reception signal properties data;
- deriving data that are related to properties of said signal transmission channel by comparing said original signal properties data and said reception signal properties data,
or is suited for deriving data that are related to properties of a signal transmission channel, wherein properties of an original signal were evaluated and corresponding original signal properties data were provided, and said original signal properties data were optionally encoded,
and wherein said original signal was watermarked using message data derived from said original signal properties data or said encoded original signal properties data,
and wherein said watermarked original signal was transmitted via said transmission channel, said method including the steps:
- detecting said message data in the received watermarked signal and correspondingly decoding said encoded message data if encoded at transmitter side, thereby providing said original signal properties data, and evaluating properties of said received watermarked signal and providing corresponding reception signal properties data;
- deriving data that are related to properties of said signal transmission channel by comparing said original signal properties data and said reception signal properties data.

In principle the inventive apparatus is suited for providing data that are related to properties of a signal transmission channel, said apparatus including:
- means being adapted for evaluating properties of an original signal and providing corresponding original signal properties data;
- optional means being adapted for encoding said original signal properties data;
- means being adapted for watermarking said original signal using message data derived from said original signal properties data or said encoded original signal properties data;
- means being adapted for transmitting said watermarked original signal via said transmission channel,
wherein the embedded message data can be used in a receiver of said transmitted watermarked original signal as follows:
- detecting said message data in the received watermarked signal and correspondingly decoding said encoded message data if encoded at transmitter side, thereby providing said original signal properties data, and evaluating properties of said received watermarked signal and providing corresponding reception signal properties data;
- deriving data that are related to properties of said signal transmission channel by comparing said original signal properties data and said reception signal properties data,
or is suited for deriving data that are related to properties of a signal transmission channel, wherein properties of an original signal were evaluated and corresponding original signal properties data were provided, and said original signal properties data were optionally encoded,
and wherein said original signal was watermarked using message data derived from said original signal properties data or said encoded original signal properties data,
and wherein said watermarked original signal was transmitted via said transmission channel, said apparatus including:
- means being adapted for detecting said message data in the received watermarked signal and for correspondingly decoding said encoded message data if encoded at transmitter side, thereby providing said original signal properties data;
- means being adapted for evaluating properties of said received watermarked signal and for providing corresponding reception signal properties data;
- means being adapted for deriving data that are related to properties of said signal transmission channel by comparing said original signal properties data and said reception signal properties data.

Advantageous additional embodiments of the invention are disclosed in the respective dependent claims.

### Drawings

Exemplary embodiments of the invention are described with reference to the accompanying drawings, which show in:
- Fig. 1: channel equalisation for analog telephony supported by watermark-transmitted side information on the long-term spectral envelope of the original signal;
- Fig. 2: noise reduction for analog telephony supported by watermark-transmitted side information on the shortterm periodogram of the original signal;
- Fig. 3: channel identification for quality monitoring.

### Exemplary embodiments

Information on certain statistical properties of the original signal is determined at transmitter side and is embedded into the transmission signal itself by watermarking. This hidden information is usable with a dedicated detection device at a receiver. That is, by watermarking a hidden channel is constructed that can carry statistical information about the original signal to the receiver. With this information the receiver can for example:
- apply non-blind channel equalisation techniques without need for training sequences and without having to rely on any uncertain assumption inherent to today's blind channel identification approach;
- use the information as a priori knowledge on the original signal for signal enhancement, e.g. for adaptive noise reduction;
- detect any modification of the signal during transmission like linear filtering or additive signal components. This feature can be used to e.g. check the integrity of signals.

The essential advantage of the invention is its ability to measure statistical properties of the transmission channel, like linear distortion or additive noise interference, at receiver side without the need to know the original signal or to introduce special protocols or training sequences. Compared to traditional blind channel identification schemes, the invention has the advantage of obtaining much better results that are not limited by the quality of inherent assumptions.

A disadvantage is that the amount of data that can be transported via a watermark inside the transmission signal itself is constrained. Thus, it cannot be expected that the same channel properties can be evaluated by the proposed scheme as with a traditional scheme based on specific training sequences.

In the sequel, three example applications of the invention are described in order to clarify the invention principle.

### Channel equalisation for analog telephony

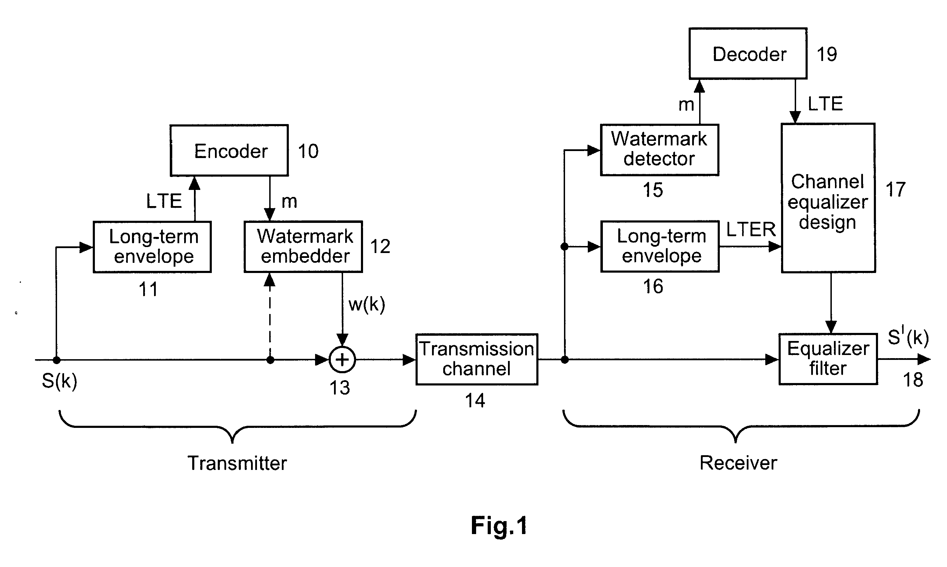

The invention can be applied in telephony systems to tackle any kind of linear distortion as, for example, produced by analog transmission lines. Because the standards "ITU-T recommendations for analog telephony" do not foresee any kind of training methodology, a training sequence (like a short sequence of white noise) will annoy the listener at the receiver side. Thus, only blind schemes can be applied today. The corresponding embodiment is illustrated in Fig. 1. At transmitter side the long-term spectral envelope of the speech signal is determined in envelope calculating means 11 from the original signal s(k). The long-term spectral envelope LTE can be calculated e.g. by averaging short-term periodograms for a certain number of signal frames, covering a period of e.g. 1 second. The spectral envelope is quantised and preferably encoded in encoder means 10, thus producing a message 'm' which is fed into watermark embedder means 12 that produce a watermark w(k) to be added in a combiner 13 to the original signal s(k). The watermark is to be determined such that the watermarked signal s(k)+ w(k) still sounds exactly like, or very similar to, the original input signal s(k). Thereby it is guaranteed that the system is backwards compatible in the sense that any existing receiver may be connected to this transmitter without any annoying signal degradation. Hence, there is no need for bi-directional communication to negotiate the capabilities between transmitter and receiver. Several possibilities to perform this kind of transparent watermark embedding are known from literature, including a technology proposed by Thomson in patent applications PCT/EP2006/062001 and PCT/EP2006/065973.

The watermarked signal is transmitted via a transmission channel 14, e.g. an analog line. Thereby, it may be subject to linear and/or non-linear distortion and/or additive noise. The distortion affects both the signal and the watermark. The watermark embedding/detection processing used is to be robust against the expected distortions.

At receiver side, watermark detector means 15 extract the message 'm' from the received signal. By correspondingly decoding this message in decoder means 19, the spectral envelope LTE of the original signal is determined. In parallel, the long-term spectral envelope LTER of the received signal is computed in envelope calculating means 16, using the same processing as it was used in the transmitter when determining the long-term spectral envelope of the original signal. By comparing in channel equaliser design means 17 the long-term spectral envelope LTE of the original signal and the long-term spectral envelope LTER of the received signal, the linear distortion characteristics of the transmission channel can be identified. With this knowledge, in means 17 an equalisation filter is designed or dynamically controlled for compensating for at least parts of the linear distortion. The calculated or selected filter coefficients are applied in an equaliser filter 18 to the received signal, providing a reconstructed or equalised output signal s'(k).

The invention has the advantage that it allows for much better results than blind equalisation techniques. Instead of assumptions, the equaliser can rely on measured statistical properties sent by the transmitter.

### Adaptive noise reduction

The second example relates to adaptive noise reduction in audio or speech signals. Today, most of the noise reduction schemes are blind, i.e. they must rely on the noisy signal only. A very challenging part of noise reduction processing is to determine from this noisy signal which portion of it is noise and which portion is the desired signal. The noise reduction algorithm needs this information for determining coefficients of the adaptive noise suppression filter to be applied to the noisy signal for producing the de-noised signal, cf. the above cited Vary and Martin book.

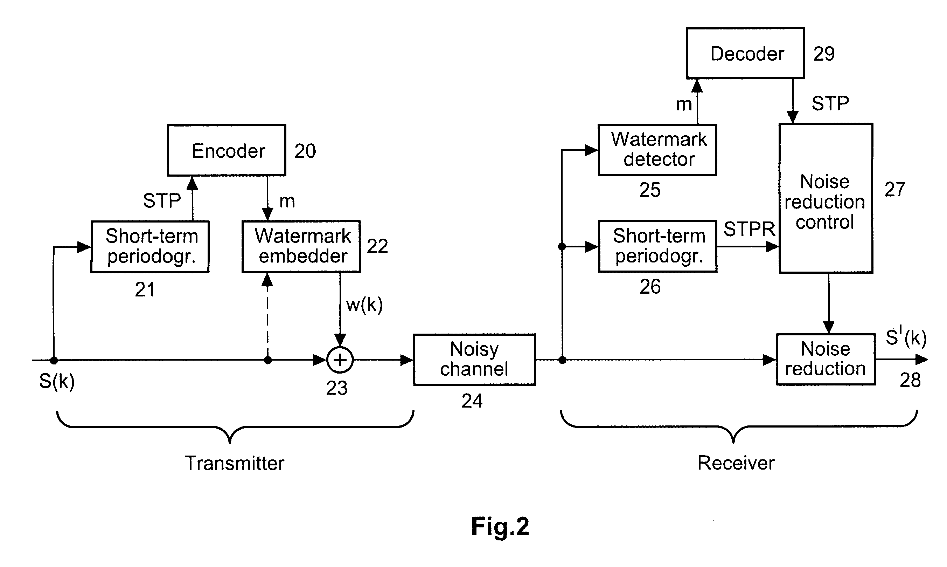

In Fig. 2, at transmitter side, short-term periodograms STP are determined in short-term periodogram calculating means 21 from the original signal s(k). The short-term periodograms are quantised and preferably encoded in encoder means 20, thus producing a message 'm' which is fed into watermark embedder means 22 that produce a watermark w(k) to be added in a combiner 23 to the original signal s(k). The watermark is to be determined such that the watermarked signal s(k)+ w(k) still sounds exactly like, or very similar to, the original input signal s(k). Thereby it is guaranteed that the system is backwards compatible in the sense that any existing receiver may be connected to this transmitter without any annoying signal degradation. Again, there is no need for bi-directional communication to negotiate the capabilities between transmitter and receiver. For high-quality noise reduction, one periodogram is to be transmitted about every 20 ms. Therefore, the data rate of the watermark required for this approach is much higher than for the previous embodiment. However, it is feasible to transmit the data rate required for this information by watermarking techniques without annoying artefacts, at least in speech signals, see for example the above cited Geiser et al. article.

The watermarked signal is transmitted via a noisy channel 24 in which the watermarked signal is subject to additive noise, degrading the quality of the channel output. Again, the watermarking technology used is robust against the expected level of noise interference.

At receiver side, watermark detector means 25 extract from the received signal the watermark message 'm'. By correspondingly decoding this message in decoder means 29, the original short-term periodograms STP are determined. In parallel, the short-term periodograms STPR of the received signal are computed in short-term periodogram calculating means 26, using the same processing as it was used in the transmitter when determining the short-term periodograms of the original signal. In noise reduction control means 27 comparing of the short-term periodograms STP of the original signal with the short-term periodograms STPR of the received signal is then used as an a priori knowledge to (statically or dynamically) estimate the level of noise added during transmission, and it can be used to control (e.g. the related coefficients of) a noise reduction process in noise reduction means 28, thereby providing a reconstructed or equalised output signal s'(k). Thus, instead of having to estimate noise level and a priori spectral envelope blindly from the received contaminated signal only, the noise reduction processing can exploit the measured a priori knowledge on the original signal received via the watermark channel to produce an output signal with a much better quality than today's blind noise reduction schemes.

### Quality monitoring and integrity checking

Measuring statistical channel properties can be used for evaluating and monitoring the signal quality after a signal has been transmitted via an adverse channel. This mechanism would be interesting e.g. for content providers to check that broadcasters are sending their content with a minimum required quality level, or for radio network operators to evaluate the transmission quality within their networks, cf. the above cited Rix et al. article.

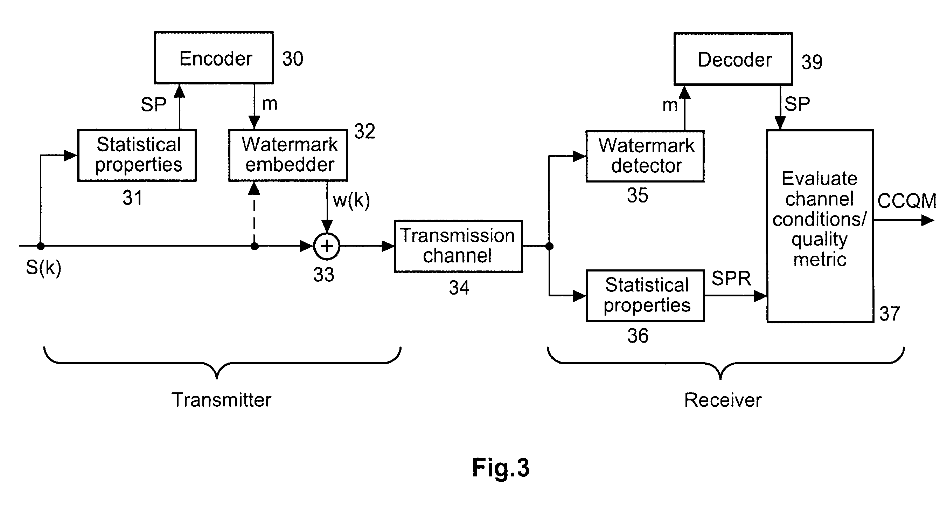

In Fig. 3, at transmitter side, statistical properties SP are determined in statistical properties calculating means 31 from the original signal s(k). The statistical properties values or data can be quantised and encoded in encoder means 30, thus producing a message 'm' which is fed into watermark embedder means 32 that produce a watermark w(k) to be added in a combiner 33 to the original signal s(k). The watermark is to be determined such that the watermarked signal s(k)+ w(k) still sounds exactly like, or very similar to, the original input signal s(k).

The watermarked signal is transmitted via a transmission channel 34 in which the watermarked signal can be subject to any degradation of the channel output.

At receiver side, watermark detector means 35 extract from the received signal the watermark message 'm'. By correspondingly decoding this message in decoder means 39, the original statistical properties SP are determined. In parallel, the statistical properties SPR of the received signal are computed in statistical properties calculating means 36, using the corresponding transmitter side processing. From the channel properties, e.g. by assessing the estimated amount of additive signals or noise, or by measuring linear distortions, i.e. from the SP and SPR data, a channel condition or quality metric CCQM can be derived in channel conditions and channel quality metrics means 37.

Again, owing to the direct transmission of a priori knowledge via the hidden watermark, the determined quality metric is much more reliable than that obtainable via blind processings.

An advantage of the inventive transmission of statistical properties of the original signal via watermarking techniques for channel identification is that it provides a significantly better quality than blind channel identification schemes. Further, because transmission of the statistical properties takes place inside the transmission signal itself, there is no need for specific training sequences or external protocols. However, protocols or synchronisation etc. can be used inside the watermark message. The watermark has the potential to 'survive' several un-coordinated stages of signal transmission or signal processing.

Advantageously, the solution is fully backwards compatible with existing signal transmission schemes.

In summary, the invention allows to introduce a priori information for channel identification in applications for which it is per se not possible to transmit any side information via explicit communication paths.

The invention is applicable to any kind of signal transmission via unknown channels.

## Claims

1. Method for determining data that are related to properties of a signal transmission channel (14, 24, 34), said method including the steps:
- evaluating (11, 21, 31) properties of an original signal (s(k)) and providing corresponding original signal properties data (LTE, STP, SP), and optionally encoding (10, 20, 30) said original signal properties data;
- watermarking (w(k); 12, 13; 22, 23; 32, 33) said original signal using message data (m) derived from said original signal properties data or said encoded original signal properties data;
- transmitting said watermarked original signal via said transmission channel;
- at receiver side, detecting (15, 25, 35) said message data (m) in the received watermarked signal and correspondingly decoding said encoded message data (m) if encoded at transmitter side, thereby providing said original signal properties data, and evaluating (16, 26, 36) properties of said received watermarked signal and providing corresponding reception signal properties data (LTER, STPR, SPR);
- deriving data that are related to properties of said signal transmission channel by comparing (17, 27, 37) said original signal properties data (LTE, STP, SP) and said reception signal properties data (LTER, STPR, SPR).

2. Method for providing data that are related to properties of a signal transmission channel (14, 24, 34), said method including the steps:
- evaluating (11, 21, 31) properties of an original signal (s(k)) and providing corresponding original signal properties data (LTE, STP, SP), and optionally encoding (10, 20, 30) said original signal properties data;
- watermarking (w(k); 12, 13; 22, 23; 32, 33) said original signal using message data (m) derived from said original signal properties data or said encoded original signal properties data;
- transmitting said watermarked original signal via said transmission channel,
wherein the embedded message data (m) can be used in a receiver of said transmitted watermarked original signal as follows:
- detecting (15, 25, 35) said message data (m) in the received watermarked signal and correspondingly decoding said encoded message data (m) if encoded at transmitter side, thereby providing said original signal properties data, and evaluating (16, 26, 36) properties of said received watermarked signal and providing corresponding reception signal properties data (LTER, STPR, SPR);
- deriving data that are related to properties of said signal transmission channel by comparing (17, 27, 37) said original signal properties data (LTE, STP, SP) and said reception signal properties data (LTER, STPR, SPR).

3. Method for deriving data that are related to properties of a signal transmission channel (14, 24, 34), wherein properties of an original signal (s(k)) were evaluated (11, 21, 31) and corresponding original signal properties data (LTE, STP, SP) were provided, and said original signal properties data were optionally encoded (10, 20, 30), and wherein said original signal was watermarked (w(k); 12, 13; 22, 23; 32, 33) using message data (m) derived from said original signal properties data or said encoded original signal properties data,
and wherein said watermarked original signal was transmitted via said transmission channel, said method including the steps:
- detecting (15, 25, 35) said message data (m) in the received watermarked signal and correspondingly decoding said encoded message data (m) if encoded at transmitter side, thereby providing said original signal properties data, and evaluating (16, 26, 36) properties of said received watermarked signal and providing corresponding reception signal properties data (LTER, STPR, SPR);
- deriving data that are related to properties of said signal transmission channel by comparing (17, 27, 37) said original signal properties data (LTE, STP, SP) and said reception signal properties data (LTER, STPR, SPR).

4. Apparatus for providing data that are related to properties of a signal transmission channel (14, 24, 34), said apparatus including:
- means (11, 21, 31) being adapted for evaluating properties of an original signal (s(k)) and providing corresponding original signal properties data (LTE, STP, SP);
- optional means (10, 20, 30) being adapted for encoding said original signal properties data;
- means (12, 13; 22, 23; 32, 33) being adapted for watermarking said original signal using message data (m) derived from said original signal properties data or said encoded original signal properties data;
- means being adapted for transmitting said watermarked original signal via said transmission channel,
wherein the embedded message data (m) can be used in a receiver of said transmitted watermarked original signal as follows:
- detecting (15, 25, 35) said message data (m) in the received watermarked signal and correspondingly decoding said encoded message data (m) if encoded at transmitter side, thereby providing said original signal properties data, and evaluating (16, 26, 36) properties of said received watermarked signal and providing corresponding reception signal properties data (LTER, STPR, SPR);
- deriving data that are related to properties of said signal transmission channel by comparing (17, 27, 37) said original signal properties data (LTE, STP, SP) and said reception signal properties data (LTER, STPR, SPR).

5. Apparatus for deriving data that are related to properties of a signal transmission channel (14, 24, 34),
wherein properties of an original signal (s(k)) were evaluated (11, 21, 31) and corresponding original signal properties data (LTE, STP, SP) were provided, and said original signal properties data were optionally encoded (10, 20, 30),
and wherein said original signal was watermarked (w(k); 12, 13; 22, 23; 32, 33) using message data (m) derived from said original signal properties data or said encoded original signal properties data,
and wherein said watermarked original signal was transmitted via said transmission channel, said apparatus including:
- means (15, 25, 35) being adapted for detecting said message data (m) in the received watermarked signal and for correspondingly decoding said encoded message data (m) if encoded at transmitter side, thereby providing said original signal properties data;
- means (16, 26, 36) being adapted for evaluating properties of said received watermarked signal and for providing corresponding reception signal properties data (LTER, STPR, SPR);
- means (17, 27, 37) being adapted for deriving data that are related to properties of said signal transmission channel by comparing said original signal properties data (LTE, STP, SP) and said reception signal properties data (LTER, STPR, SPR).

6. Method according to claim 1 or 3, or apparatus according to claim 5, wherein said derived data that are related to properties of said signal transmission channel are used for controlling an equaliser filter (18) that provides from said received signal a reconstructed or equalised output signal (s'(k)).

7. Method or apparatus according to claim 6, wherein said original signal properties data represent a long-term spectral envelope (LTE) which can be calculated by averaging short-term periodograms for several signal frames of said original signal.

8. Method according to claim 1 or 3, or apparatus according to claim 5, wherein said derived data that are related to properties of said signal transmission channel are used for controlling a noise reduction (28) that provides from said received signal a noise reduced output signal (s' (k)) .

9. Method or apparatus according to claim 7, wherein said original signal properties data represent short-term periodograms, which data are used for determining coefficients of an adaptive noise suppression filter (28).

10. Method according to claim 1 or 3, or apparatus according to claim 5, wherein said derived data that are related to properties of said signal transmission channel are used for evaluating (37) the conditions (CCQM) or a quality metric (CCQM) of said channel.

11. Method according to one of claims 1, 3 and 6 to 10, or apparatus according to one of claims 5 to 10, wherein at receiver side the detection and processing of the watermark data is switched off or de-activated in case - e.g. within a pre-determined time period - no watermark is detected.

12. Data stream in which original signal properties data (LTE, STP, SP) are embedded using watermarking according to the method of claim 1 or 3.
